# EUROPEAN PATENT APPLICATION

(11) **EP 1 199 667 A1**
(43) Date of publication of application: **24.04.2002**
(21) Application number: 01917508.2
(22) Date of filing: 27.03.2001
(51) Int. Cl.: G06F 17/60

(54) **INVENTORY ALLOTMENT MANAGING METHOD AND INVENTORY ALLOTMENT MANAGING SYSTEM**

(30) Priority: 29.03.2000 JP 2000092497
(71) Applicant: SEIKO EPSON CORPORATION, Shinjuku-ku, Tokyo 163-0811 (JP)
(72) Inventor: YOKOTA, Tsuyoshi, Suwa-Shi, Nagano 392-8502 (JP); SHIMODA, Satoshi, Suwa-Shi, Nagano 392-8502 (JP); FURIHATA, Eiichiro, Suwa-Shi, Nagano 392-8502 (JP); FURIHATA, Isoko, Suwa-Shi, Nagano 392-8502 (JP)
(74) Representative: Sturt, Clifford Mark
(86) International application number: JP0102520
(87) International publication number: WO0173629

(57) **Abstract**

The present invention creates an order parts list 31 based on order information 15 to record on a memory storage 21 of computer after allocating the parts existing in a inventory list 32. After the order is confirmed, it also determines whether parts in the order parts list 31 exist in the latest inventory list 32 and refers to priority order information 33 indicating shipment priority order for each part listed on the latest inventory list 32 and creates a confirmed parts list 34 reallocating the above parts having the highest priority.

In accordance with the construction described above, this invention allows to optimize the processing to reallocate parts allocated at the time of ordering after the order is confirmed.

## Description

### Field of the Invention

The present invention relates to an order allocation management method and management system thereof wherein optimum off-the-shelf parts are automatically selected and allocated by utilizing computer system on issuing instructions for shipment processing of the parts to be built up of a plurality of parts.

### Description of the Related Art

In business where manufacturers deal with customers directly, transactions utilizing computer networks such as the Internet tend to spread increasingly. A server provides product information through the Internet, and customers operate a computer terminal on their end to select the products of their choices. Customers select constructions and optional parts of the products they desire to purchase and request final estimates to the server through on-line. When the server returns the estimate, the customers place their orders after checking the detail. Once the server has received the orders from the customers, the server gives order information to a host computer. Based on the order information, the host computer automatically issues instructions and the like for shipment processing of the parts consisting the products. The instructions are transferred to assembly lines of personal computer, warehouses, and management departments to proceed shipping processing. The sales cost can be remarkably reduced if all steps from ordering to issuing of instruction are automatically processed by utilizing computer system.

However, the conventional technique described above had the following problem to be solved. At the time of issuing final estimates to customers, the inventory of the parts consisting the products are checked in order to allocate the parts to be used. More specifically, the estimates are issued only after all parts inventory has been confirmed. However, certain time-lag exists until the order is finalized after the estimate is issued to the customer in quite a few cases. Also, in some cases, shipment cannot be processed until the reception of payment is confirmed even if the order is finalized. Meantime, a number of customers connect to the server through on-line and place order continuously. At this point, if some parts are allocated to the order while other allocated parts are reserved at the time of estimate and the order is not finalized after issuing the estimate, then the parts will not be shipped. In this case, it is desirable to process automatically to optimize the parts allocation system for first-in first-out processing of the parts and the like.

### Disclosure of the Invention

The present invention adopts the following construction to solve the problem described above.

### <Construction 1>

An order allocation management method which performs the processing to create an order parts list after allocating the parts existing in the inventory list based on the order information to record on memory storage of the computer, to refer each part listed on the latest inventory list for the priority order information indicating shipment priority order after the order is confirmed; and to create the confirmed parts list reallocating the above parts having the highest priority.

The order information includes the information parts estimate, processing of customer ordering and the like. An order will be confirmed after the processing such as the receipt of payment . The parts can be either finished products or partly finished products. This invention is an invention that computer automatically processes the allocation of equivalent parts when the parts being allocated after referring the inventory list and like at the time of ordering become out of some time stock between ordering and order confirmation. To match with the order parts list, parts in the inventory list are individually allocated. Each part in the inventory list is attached with priority order information indicting shipment priority order. The parts having the highest priority order in the list is subject to be shipped first.

Automatic reallocation allows first-in first-out processing even when the parts are not out of stock. More specifically, the parts are still in stock at the time of reallocation even if the parts are already allocated based on the order information, and the parts can be allocated for the confirmed order considering first-in first-out processing.

Equivalent parts include parts having the same model number but different manufacturer, parts having the same manufacturer but different manufacturing date, and parts having the same model number but different purchase price. The parts include an intangible option and the like found in various services besides the parts of the products to be actually sold. In addition to the latest inventory list, the memory storage of the computer includes the priority order information of each part to be allocated for order processing. The priority order information is the information indicating which parts have priority in shipment when two or more equivalent parts exist. Shipping direction based on the confirmed parts list described above automatically optimizes the allocation of off-the-shelf parts in a manner such as first-in first-out management.

### <Construction 2>

An order allocation management method according to construction 1, wherein the priority order information includes priority information according to time of parts purchase.

When a plurality of equivalent stock exists, one of the parts will be allocated. It is possible to allocate one of the parts, but for instance, give the parts having old purchase date with high priority order. This method enables first-in first-out management among the parts and alternative parts.

### <Construction 3>

An order allocation management method according to construction 1, wherein the priority order information includes priority information according to purchase price.

For instance, when the purchase prices of parts have been changed, the parts purchased at higher price are given with higher priority order. The purchase prices of the parts normally decrease gradually, it is possible to manage in first-in first-out manner by giving a priority to the parts purchased before price change. When the prices are the same, priority order information at the time of manufacture, for instance, can be used as a standard.

### <Construction 4>

An order allocation management method according to construction 1, wherein the priority order information includes priority information according to the constructions of the parts.

When the constructions of parts have been changed, it is possible to manage in first-in first-out manner by giving a priority to the parts before construction change. When the constructions are the same, priority order information at the time of manufacture, for instance, can be used as a standard.

### <Construction 5>

An order allocation management method according to construction 1, wherein the order parts list is created by allocating the parts actually existing in the inventory list.

This is the method to specifically allocate the parts confirmed to be in stock at the time of ordering.

### <Construction 6>

An order allocation management method according to construction 1, wherein said order allocation management method creates order parts list by displaying the parts' names of the parts existing in the inventory list.

This is the method to display the parts' names only in the order parts list if the parts are in stock at the time of ordering and to execute actual and specific allocation after the order is confirmed.

### <Construction 7>

An order allocation management method according to construction 1, wherein the confirmed part list is created by reallocating the parts with highest priority order out of all the equivalent parts for the parts existing in the inventory list including the part being listed up on the order parts list.

The optimization of reallocation is performed by temporarily allocating the parts in the order parts list and checking the priority order of all equivalent parts in the inventory list after the order is confirmed.

### <Construction 8>

The order allocation management method according to construction 1, wherein the confirmed parts list is created by reallocating the parts with highest priority order out of all the equivalent parts for the parts listed up on the order parts list, but not found in the inventory list.

This is the method to reallocate only the parts being out of stock in the order parts list when the order is confirmed.

### <Construction 9>

An order allocation management method according to any of the construction 1 or 8, wherein the order allocation method allocates the parts having the highest priority order to build up finished products based on a tree-shaped list in which the finished products are placed on the trunk, and equivalent parts are individually placed on a plurality of branches branched from the same trunk.

The finished product are placed on the trunk closest to the root of the tree in the tree-shaped list. Each branch can be a trunk to build up the parts placed on each branch. In this manner, freely branched tree-shaped list is obtained. The assembly parts needed to build up the finished products will be outlined on its pathway when tracing back the list considering the priority order from the root to the terminal branch. This enables simplification of the combination of allocation parts by computer processing.

### <Construction 10>

An order allocation management method according to construction 9, wherein the tree-shaped list is created such that all parts, placed on its pathway when the above tree-shaped list is traced back from the root to any of the terminal branch by selecting one of the plurality of branched branches, consist of only normally functioning parts when combined with each other.

Even if accessories of the equivalent parts are different, a parts list clearly showing the combination of the parts and its accessories are required. Creating tree-shaped list allows to uniquely allocate all correct parts by tracing back the list in order. The most appropriate parts combination is selected by performing process considering the priority order of the parts.

### <Construction 11>

An order allocation management method according to construction 10, wherein the order allocation management method allocates each part such that all parts, placed on its pathway when the above tree-shaped list is traced back from the root to any of the terminal branch by selecting one of the plurality of branched branches based on the stock list and priority order information, consist of combination of the parts having the highest priority to build up the finished products shown in the root.

This process allows computer system to create a part combination list considering the inventory list and priority order information directly from the tree-shaped list without man-assisted handling and to issue shipping instructions and the like.

### <Construction 12>

An order allocation management system comprising: order parts list creation means to create the order parts list allocating the parts existing in the inventory list based on the order information and to store in the memory storage of the computer; and
confirmed parts list creation means to execute processing to create a confirmed part list for each parts existing in the latest inventory list after confirmation by reallocating each of the above parts having high priority order by referring to the priority order information showing the shipment priority order.

This is a system invention to execute the method described in construction 1.

### <Construction 13>

An order allocation management method according to construction 12, wherein the confirmed parts list creation means allocates the parts having the highest priority order to build up the finished product based on the tree-shaped list in which the finished products are placed on the trunk, and equivalent parts are individually placed on a plurality of branches branched from the same trunk.

This is a system invention to execute the method described in construction 9.

### <Construction 14>

An order allocation management method according to construction 13, wherein the above tree-shaped list is such that all parts, placed on its pathway when the tree-shaped list is traced back from the root to any of the terminal branch by selecting one of the plurality of branched branches, consist of only normally functioning parts when combined with each other.

This is a system invention to execute the method described in construction 10.

### <Construction 15>

An order allocation management method according to construction 14, wherein the confirmed parts list creation means is such that all parts, placed on its pathway when the above tree-shaped list is traced back from the root to any of the terminal branches by selecting one of the plurality of branched branches based on the stock list and priority order information, consist of combination of the parts having the highest priority to build up the finished products shown in the root.

This is a system invention to execute the method described in construction 11.

### <Construction 16>

A computer readable recording media which records computer program to execute in sequence processing to create an order parts list allocating the parts existing in the inventory list based on the order information and to store in the memory storage of the computer; and
to create a confirmed part list regarding each part existing in the latest inventory list after confirmation by reallocating each of the parts having high priority order by referring to the priority order information showing the shipment priority order.

### Brief Description of The Drawings

FIG.1 is a block diagram showing an embodiment of the present invention system.

FIG.2 is a diagram describing the contents of priority order.

FIG.3 is an operation flowchart showing the present invention system.

FIG.4 (a) and (b) are schematic diagrams showing different operation models of the present invention system.

FIG.5 is a diagram describing the contents of equivalent parts list and confirmed parts list created based on the priority order.

FIG.6 is an operation flowchart describing the operation of confirmed parts list creation means.

### Best embodiment of the invention

An embodiment of the present invention will be described below with reference to the drawings.

### (Embodiment 1)

This system can be used to optimize the part allocation of products in the following case, for instance. First, according to the orders of the products from four customers K1, K2, K3, and K4, parts A1, A1, A2, and A2 for the products are individually allocated for each customer.
Part A1 and A2 worth exactly the same values and either one of them can be allocated, but A1 has an older manufacturer date. Stocks of these parts have been confirmed at the time of ordering. However, customers K1 and K4 made an payments right away and their orders were confirmed, but the payment from customers K2 and K3 were delayed, and their order confirmations were delayed. In this case, parts reallocation is performed at the time when the orders of customers K1 and K4 were confirmed. More specifically, reallocation of parts A1, A1 is performed individually for customers K1 and K4. Later, reallocation of parts A2, A2 is performed individually for customers K2 and K3 when the orders of customers K2 and K3 are confirmed. Consequently, equivalent parts A1, A1, A2, and A2 will be shipped in order of the length of time from the manufacturer's date regardless of the allocation order.

Here, let's take direct sale system of personal computer as an example. If it is designed such that customer can chose the construction of personal computer in detail, various parts of personal computer is subject to be ordered together. For each of these parts, allocation processing considering individual stock status at the time of ordering is required. When the number of parts is large,
reallocation processing at the time of order confirmation become quite complex. The present invention automatically processes reallocation through computer.

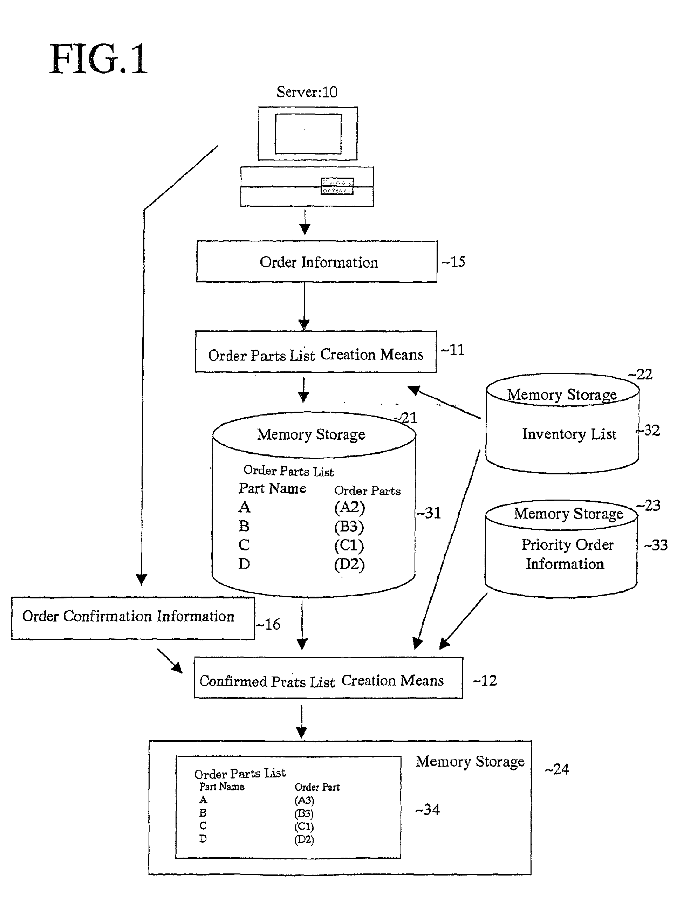

FIG.1 is a block diagram showing an embodiment of the present invention system. A system in the figure comprises a server 10, order parts list creation means 11,
confirmed parts list creation means 12 and memory storages 21, 22, 23, 24. The memory storage 21 stores an order parts list 31. This order parts list 31 is created by allocating off-the-shelf parts when a customer places an order. In this example, before an order is confirmed, it is called an order parts list 31, and a list created after the order is confirmed and reallocation is processed, it is called a confirmed part list 34.

The memory storage 22 stores the inventory list 32. The inventory list 32 is the latest list to be updated at appropriate timing. The order parts list creation means 11 is a computer program to perform processing in creating order parts list at the time of ordering by referring this inventory list 32 and after confirming its inventory. The memory storage 23 stores a priority order information 33. The priority order information 33 provides information indicating which part is shipped by priority when two or more equivalent parts exist. This information is used for such first-in first-out management. The confirmed parts list creation means 12 is a computer program to perform processing in creating confirmed parts list by referring the inventory list 32 and the priority order information 33 when the order is confirmed.

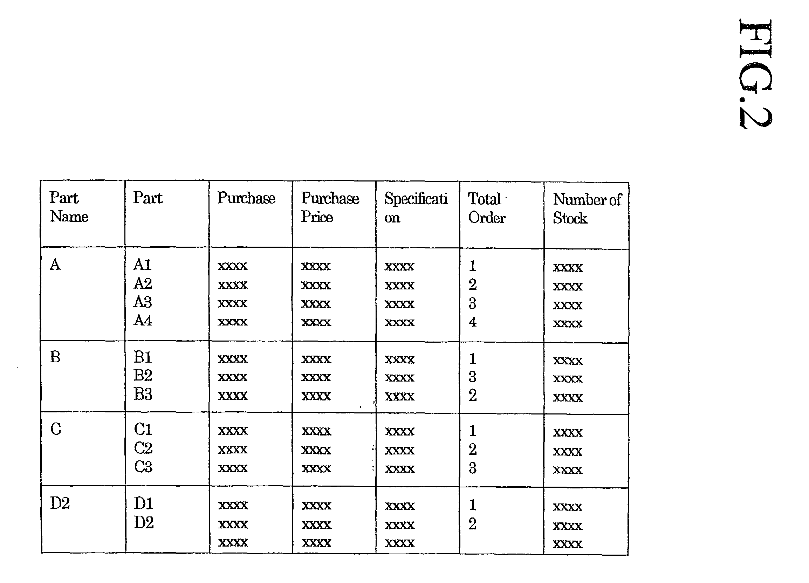

FIG.2 is a diagram describing the contents of priority order. When two or more equivalent parts exist, older parts are shipped in order for first-in first-out management. Therefore, the older parts are selected and being allocated at the time of order confirmation. Whether the parts are new or old, for instance, will be decided by the time of purchasing as a standard. Also, besides the time of purchasing, factors determining the shipping order of the parts can vary. As shown in the figure, priority order indicating which part needs to be shipped faster shall be determined by considering purchase price, construction, and other various factors collectively. The results will be recorded in the column of total order. When the equivalent parts differ only by the model number, decision that which parts are shipped faster will be automatically determined based on the priority order information. When model numbers of a plurality of parts are the same and their priority numbers are the same as well, any parts can be allocated first.

In the example shown in the figure, the type of off-the-shelf parts of part A is A1, A2, A3, and A4. These stock numbers are also recorded. The confirmed parts list creation means 12 checks if any parts are fully in stock at the time of order confirmation. If the parts are in stock, based on the total order, part A1 is firstly given a priority for allocation. When part A1 becomes out of stock, part A2, the second in the total order will be allocated. When this part A2 becomes out of stock, it will be designed that part 3, the third in the total order is allocated.

Furthermore, date processing of the inventory list will be described here using the example explained earlier. If there are parts A1, A1, A2, and A2 in the inventory list, Parts A1, A1, A2, and A2 are allocated individually when each customer places an order. Every time a part is allocated, a flag indicating already being allocated will be put on an attribute data. The parts with no flag are subject to be allocated when the first order is placed. Parts A1 and A2 worth exactly the same values and either one of them can be allocated, but A1 has an older manufacturer date. Then, customers K1 and K4 made payments right away and their orders were confirmed, but the payments from customers K2 and K3 were delayed, and their order confirmations were delayed. In this case, parts reallocation is performed including the parts with flags at the time when the orders of customers K1 and K4 were confirmed.

Furthermore, all parts A1, A1 A2, and A2 have the flags in this example, but all parts regardless of the presence and absence of the flag are subject to be reallocated. First, reallocation of the parts A1, A1 is performed individually for customers K1 and K4. This confirms the allocation of parts A1, A1, thus the parts will be removed from the inventory list or will be excluded from the targets for the subsequent reallocation. At this point, only A2, A2 are available for reallocation. Furthermore, reallocation of the parts A2, A2 is performed individually for customers K2 and K3 when the orders of customers K2 and K3 are confirmed. If there is new shipment of the equivalent parts up to this point, there will be no reallocatable parts in the inventory list. In this manner, parts will be shipped in order of the length of time from the manufacturer's date regardless of the allocation order.

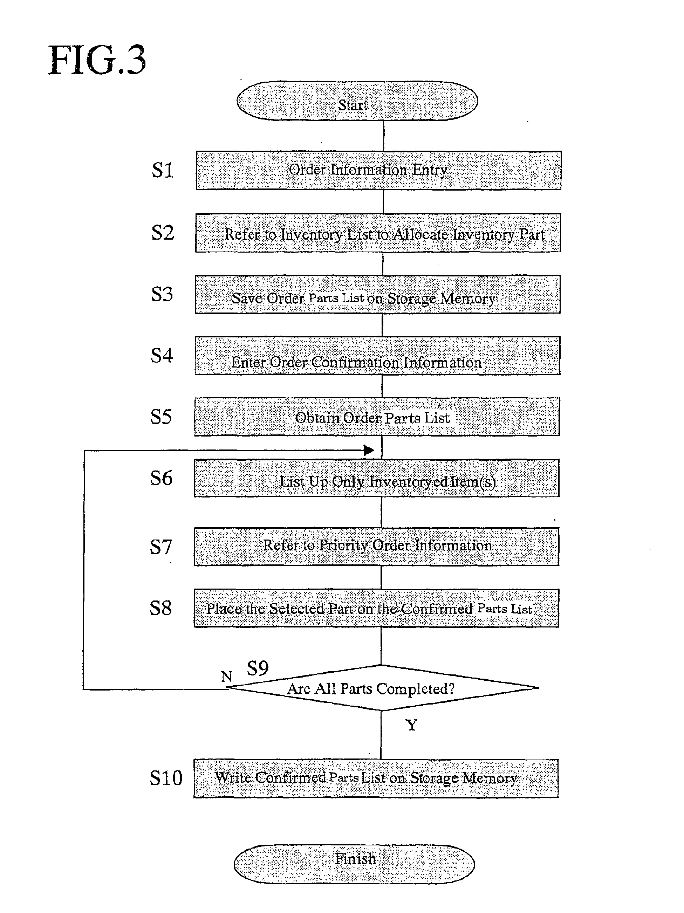

FIG.3 is an operation flowchart showing the present invention system.

A detailed operation of the present invention system will be described with reference to FIG.3 and FIG.1.

First, an order information 15 is entered through a server 10 at Step S1. If the content of the order information 15 are parts with their names A, B, C, and D, in Step S2, the order parts list creation means 11 refers to an inventory list 32. Then, in accordance with the order information, the stock of parts A2, B3, C1, and D2 will be allocated. The order parts list created 31 at Step S3 will be stored in the memory storage 21.

In the next Step S4, the order confirmed information 16 will be entered through the server 10. In the Step S5, the confirmed parts list creation means 12 read out the order parts list 31 from the memory storage 21.

Furthermore, only parts in the stock will be listed up for the identical part name with the parts in the order parts list 31 by referring the latest inventory list at Step S6. For instance, if there is no part A2 in the stock, the parts A1, A3 and A4 will be listed up for part's name A. In the next Step S7, which parts on the list should be given a priority for shipment will be selected by referring the priority order information 33. If the part A3 is selected here, in Step S8, the chosen part A3 is written on the confirmed parts list.

Next, in Step S9, whether the processing from Step S6 to Step S8 for all the parts have been completed will be determined. If it was not completed, return to Step S6. When the processing from Step S6 to Step S8 for all parts are completed, finish a series of processing by writing the confirmed parts list at Step S10 on the memory storage 24. The confirmed parts list 34 stored on the memory storage 24 will be transferred to shipping department, for instance, to be used for the printing and the like of request instructions.

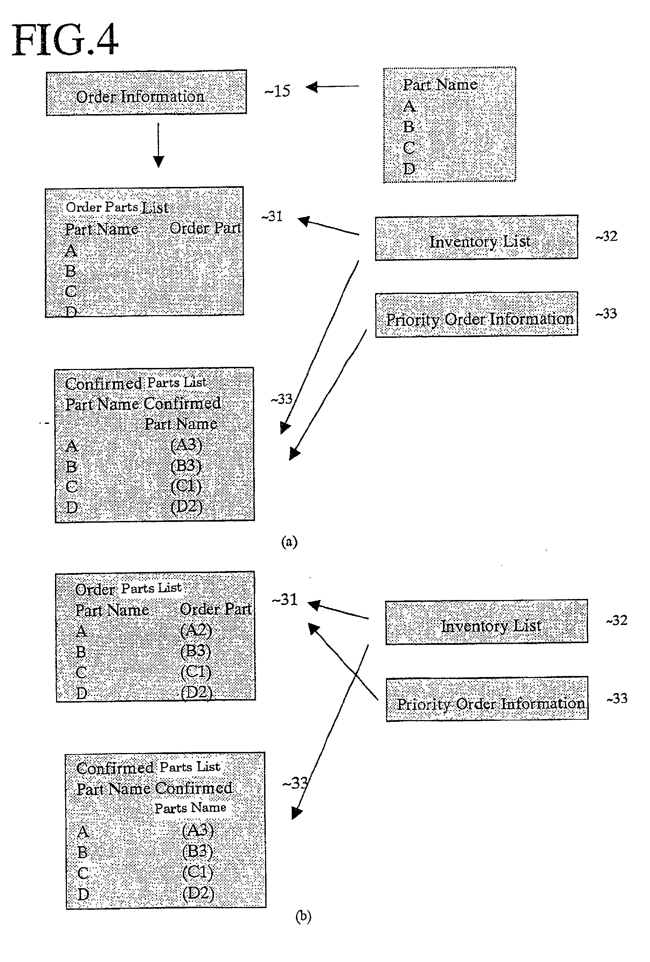

FIG.4 (a) and (b) are schematic diagrams showing different operation models of the present invention system.

In FIG.4(a), the order parts list creation means 11 creates order parts list that listing only the parts' names of the ordered parts based on the order information 15. More specifically, the order parts list creation means 11 only checks the presence of the corresponding parts' names by referring the inventory list 32 and simply stores the order information 15 on the memory storage 21. More specifically, the checks of the presence or absence of the parts in stock or its allocation are not required. If the ordered parts have been already checked whether they are targeted parts for the inventory at the time of ordering, the order parts list may be simply created from the order information. More specifically, order parts list creation means 11 does not need to refer to the inventory list. Then, the confirmed parts list will be created in exactly the same process when the order is confirmed. In the case of this example, the processing to create the order parts list is facilitated, and stored data is also simplified. Furthermore, optimization is realized without fail as the confirmed parts list 34 is created only after the latest inventory list 32 and the priority order information are referred.

In FIG.4(b), the order parts list creation means 11 creates the order parts list 31 considering the priority order by referring the inventory list 32 and the priority order information 33. In this manner, the confirmed parts list creation means 12 can create the confirmed parts list 34 by using the exact contents in the order parts list 31 as long as the stocked parts exist. More specifically, only the parts out of stock are reallocated using the priority order information.

Furthermore, in the cases being described using FIG.1 and FIG.4(a), confirmed parts list creation means 12 can be designed to create the confirmed parts list 34 by using the exact contents in the order parts list 31 as long as the stocked parts exist.

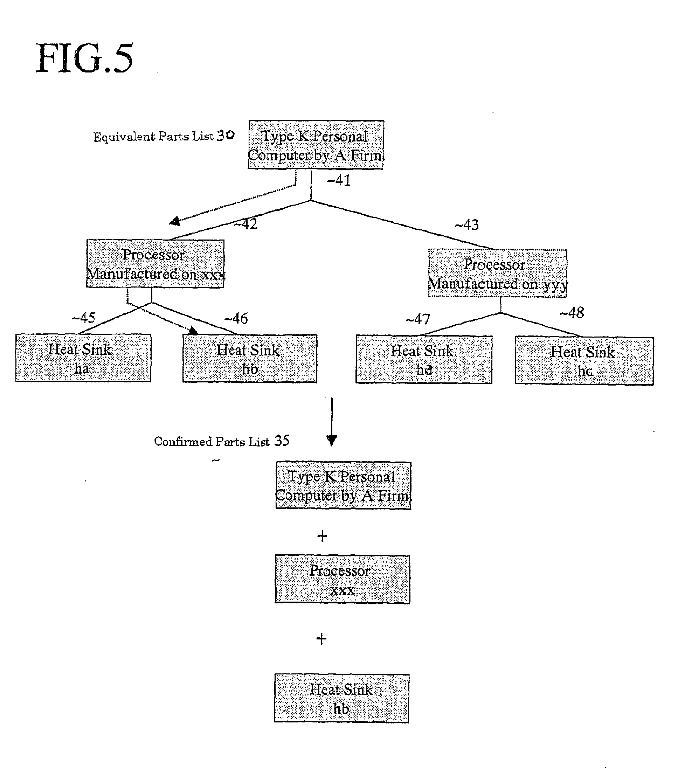

FIG.5 is a diagram describing the contents of equivalent parts list and confirmed parts list created based on the priority order. If, for instance, assembly parts of a processor (substrate loaded with a processor) and a heat sink in the figure for the parts of the personal computer is available. The assembly parts like this need to be allocated as a set. Furthermore, if there are two kinds of heat sinks attachable to a processor , one of them needs to be allocated in accordance with the above priority order. Optimization method of the parts reallocation processing using the priority order information for such assembled parts will be described below.

As shown in the figure, an equivalent parts list 30 is a so called hierarchical structured data like a branch. This equivalent parts list 30 is designed to place a finished product "type K personal computer by Company A " on the position of a trunk 41 and equivalent parts are placed in order on branches 42 and 43 branched from this trunk 41. Using this tree as an example, allocation process of the assembled parts of the processor and the heat sink will be described. The confirmed parts list 35 lists up the assembled parts to be allocated considering the priority order.

If there are two kinds of equivalent processors here to be used for a personal computer , a processor xxx is placed on the branch 42 and a processor yyy is placed on the branch 43. These two kinds of processors in the figure have the same model number but different manufacturer's dates. Also, in the case where the constructions of an accessory, a heat sink is slightly different due to the different manufacturer's date shown.

If there are two kinds of equivalent heat sink attachable to the processor xxx , at this time, if branch 42 where processor xxx is placed were a trunk, heat sink ha is placed on the branch 45 and heat sink hb is placed on the branch 46. Also, if there are two kinds of equivalent heat sinks attachable to the processor yyy , at this time, if branch 43 where processor yyy is placed were a trunk, heat sink ha is placed on the branch 47 and heat sink hc is placed on the branch 48.

In this manner, when type K personal computer by Company A is being built up, there are two kinds of equivalent parts available for processor only and four kinds if the combination with heat sinks is included. Furthermore, the heat sink ha is attachable to both processor xxx and processor yyy, but heat sink hb is attachable to processor xxx only, and the heat sink hc is attachable to processor yyy only.

If this kind of allocation of the parts is manually performed, extensive knowledge of parts and a number of their manuals will be required. In this example, a tree-shaped list as shown in the figure is created automatically by utilizing the computer system to show the combination pattern of the equivalent parts to build up a finished product. This part allocation processing allows computer system to select easily and automatically the appropriate combination of the parts after the order is confirmed. More specifically, it is designed such that all parts, placed on its pathway when the tree-shaped list is traced back from the root to any of the terminal branch by selecting one of a plurality of branched branch in the figure, consist of only normally functioning parts when combined with each other.

When the branch 42 and branch 46 in the equivalent parts list 30 in the figure are traced back from the trunk 41 as shown with the broken line arrow, a confirmed parts list 35 indicating a parts group such that a processor xxx and heat sink hb are attached on the type K personal computer by A firm. Other parts of this personal computer, for instance, hard disk drive, floppy disk drive, display and the like can be selected in a similar manner. In a case where a plurality of mutually closely related parts are combined to obtain finished products, the creation of the tree-shaped list allows computer system to uniformly perform parts selecting processing considering the priority order previously explained.

Furthermore, both equivalent parts lists 30 shown in FIG.5 are equivalent in light of function, one of them can be freely selected to assemble a personal computer for the shipment. Next, the operation of the confirmed parts list creation means 12 shown in FIG.1 will be described. Its general operation is the same as the one explained in FIG.1 or FIG.3, operations, especially an unique operation when the tree-shaped equivalent parts list 30 in FIG.5 is used will be mainly explained.

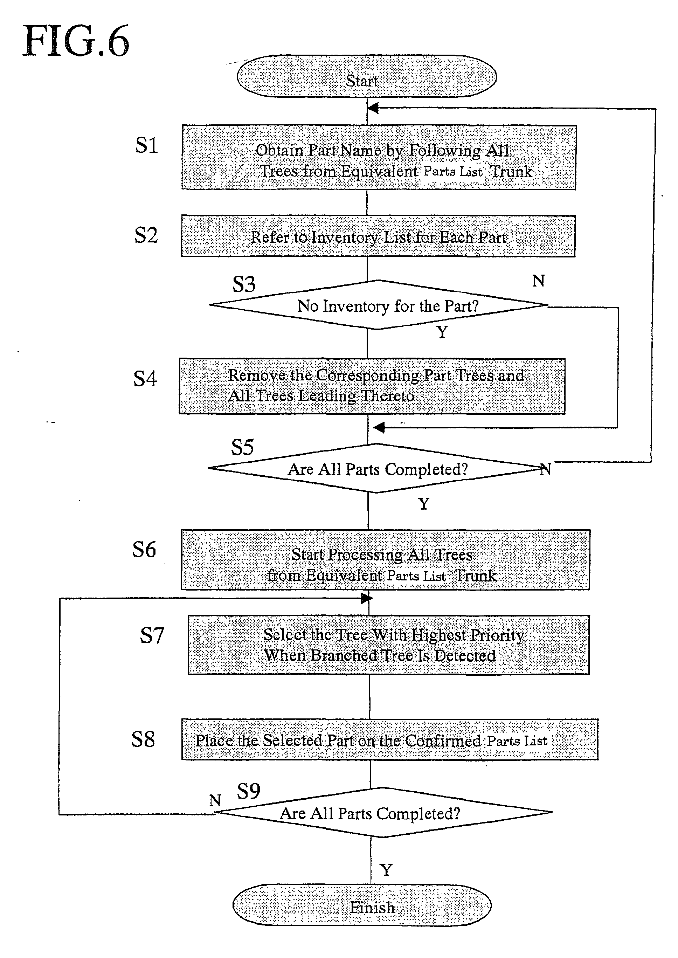

FIG.6 is an operation flowchart describing the operation of the confirmed parts list creation means. First, parts' names placed on the individual branch are obtained by tracing all branches from the trunk of the equivalent part list 30 in FIG.5 in Step S1. In this manner, off-the-shelf parts list is referred for all parts listed in the equivalent parts list 30 in the next Step S2 and the presence or absence of the stock will be determined at Step S3. If the parts are in stock, jump to Step S5. If not, the parts will be removed from the equivalent parts list 30 as the parts can not be used. At this point, terminal side of the tree from the branch that the parts are placed, more specifically, the opposite side of the branch against the trunk will be entirely removed.

In Step S5, whether the above processing was completed for all parts should be determined and the processing from Step S1 to Step S5 will be repeated. In this manner, after the equivalent parts list is organized such that all parts placed on the individual branch on the equivalent parts list 30 are in stock, the selection of parts considering the priority order will be started. First, in Step S6, type K personal computer by A firm on the trunk of the equivalent parts list 30 is traced back to downward in order. If a branch is not diverged when it moves from the trunk to the branch, the parts placed on the trunk or individual branch are simply transferred to the confirmed parts list. However, each branch is diverged in the example shown in FIG.5. When a diverged branch is detected, the branch with higher priority order is selected (Step S7) and the parts of the chosen branch in the confirmed parts list are included (Step S8). In Step S9, it is determined whether next branch is available, and if the next branch is available, return to Step S7 to repeat the same processing. The above operations complete the optimized parts selection considering priority orders of the off-the-shelf parts.

Furthermore, an order sales system of a personal computer was used as an example above, however this invention can be widely applied for various parts of ordering sale. Even not in the case of finished products and parts, the present invention allows to allocate the optimum alternative parts for paired parts which are sold together. Also, for instance, this invention can be used for services such as tours and the like organized by a travel agent. For instance, the assignment of hotel room can be processed by granting equivalent rooms as the above equivalent parts.

This invention allows automatically to optimize room assignment when travel request is actually placed after the travel reservation.

Also, in the example above, the order sale system utilizing the Internet was explained, but the present invention can be widely used for a system in which reallocation of the parts is performed eventually for parts production and shipment after the manufacturer places an order for parts and the parts are allocated.

Furthermore, each functional block shown in the embodiment above can consist of individual program module or combined program module. Also, part of these functional blocks can be consisted from a logical circuit hardware. Also, each program module can be operated by combining pre-existing application programs or be operated as an independent program.

The computer program to realize the present invention described above can be stored in a computer readable recording media such as CD-ROM and be installed for use. Also, this program can be used by downloading in the computer memory through a network. In these cases, it is desirable to establish automatic processing for optimizing reallocation of the parts to facilitate first-in and first-out operation of the parts.

## Claims

1. An order allocation management method which performs the processing to create an order parts list after allocating the parts existing in the inventory list based on the order information to record on memory storage of the computer, to refer each part listed on the latest inventory list for the priority order information indicating shipment priority order after the order is confirmed; and to create the confirmed parts list reallocating the above parts having the highest priority.

2. An order allocation management method according to claim 1, wherein the priority order information includes priority information according to time of parts purchase.

3. An order allocation management method according to claim 1,wherein the priority order information includes priority information according to purchase price.

4. An order allocation management method according to claim 1, wherein the priority order information includes priority information according to constructions of the parts.

5. An order allocation management method according to claim 1, wherein the order parts list is created by allocating the parts
actually existing in the inventory list.

6. An order allocation management method which performs the processing to create an order parts list indicating the parts' names existing in the inventory list based on the order information to record on memory storage of the computer, to refer each part being listed in the order parts list as well as on the latest inventory list for the priority order information indicating shipment priority order after the order is confirmed, and to create a confirmed parts list allocating the above parts having the highest priority.

7. An order allocation management method according to claim 1, wherein
the confirmed parts list is created by reallocating the parts with highest priority order out of all the equivalent parts for the parts existing in the inventory list including the part being listed up on the order parts list.

8. An order allocation management method according to claim 1, wherein
the confirmed parts list is created by reallocating the parts with highest priority order out of all the equivalent parts for the parts listed up on the order parts list, but not found in the inventory list.

9. An order allocation management method according to any of the claims 1 to 8, wherein the order allocation method allocates the parts having the highest priority order to build up finished products based on a tree-shaped list in which the finished products are placed on the trunk, and equivalent parts are individually placed on a plurality of branches branched from the same trunk.

10. An order allocation management method according to claim 9, wherein
the tree-shaped list is created such that all parts, placed on its pathway when the tree-shaped list is traced back from the root to any of the terminal branch by selecting one of the plurality of branched branches, consist of only normally functioning parts when combined with each other.

11. An order allocation management method according to claim 10, wherein the order allocation management method allocates each part such that all parts, placed on its pathway when the above tree-shaped list is traced back from the root to any of the terminal branch by selecting one of the plurality of branched branches based on the stock list and priority order information, consist of combination of the parts having the highest priority to build up the finished products shown in the root.

12. An order allocation management system comprising: order parts list creation means to create the order parts list allocating the parts existing in the inventory list based on the order information and to store in the memory storage of the computer; and confirmed parts list creation means to execute processing to create a confirmed parts list for each part existing in the latest inventory list after confirmation by reallocating each of the parts having high priority order by referring to the priority order information showing the shipment priority order.

13. An order allocation management method according to claim 12,
wherein the
confirmed parts list creation means allocates the parts having the highest priority order to build up the finished product based on the tree-shaped list in which the finished products are placed on the trunk, and equivalent parts are individually placed on the plurality of branches branched from the same trunk.

14. An order allocation management method according to claim 13, wherein the tree-shaped list is such that all parts, placed on its pathway when the above tree-shaped list is traced back from the root to any of the terminal branch by selecting one of the plurality of branched branches, consist of only normally functioning parts when combined with each other.

15. An order allocation management method according to claim 14, wherein
the confirmed parts list creation means is such that all parts, placed on its pathway when the tree-shaped list is traced back from the root to any of the terminal branches by selecting one of the plurality of branched branches based on the stock list and priority order information, consist of combination of the parts having the highest priority to build up the finished products shown in the root.

16. A computer readable recording media which records computer program to execute in sequence
processing to create an order parts list allocating the parts existing in the inventory list based on the order information and to store in the memory storage of the computer; and to create
a confirmed part list regarding each part existing in the latest inventory list after confirmation by reallocating each of the parts having high priority order by referring to the priority order information showing the shipment priority order.
